# EUROPÄISCHE PATENTSCHRIFT

(11) **EP 0 533 017 B1**
(45) Veröffentlichungstag und Bekanntmachung des Hinweises auf die Patenterteilung: **30.10.1996**
(21) Anmeldenummer: 92115277.3
(22) Anmeldetag: 07.09.1992
(51) Int. Cl.: A01N 47/38, A01N 43/653, A01N 25/02, B27K 3/50

(54) **Wasserbasierte, lösungsmittel- und emulgatorfreie mikrobizide Wirkstoffkombination**
Water based, solvent- and emulsifier-free microbicidal combination of active agents
Combinaison microbicide à base d'eau des agents actifs, qui ne contienent pas de solvant ni d'émulsifiant

(30) Priorität: 19.09.1991 DE 4131205
(43) Veröffentlichungstag der Anmeldung: 24.03.1993
(73) Patentinhaber: BAYER AG, 51368 Leverkusen (DE)
(72) Erfinder: Ludwig, Georg-Wilhelm, Dr., W-4150 Krefeld 1 (DE); Exner, Otto, Dr., W-4030 Ratingen (DE); Büchel, Karl Heinz, Prof. Dr., W-5093 Burscheid (DE); Holmwood, Graham, Dr., W-5600 Wuppertal 11 (DE)

(56) Entgegenhaltungen:
- EP-A- 0 035 096
- EP-A- 0 048 997
- EP-A- 0 148 526
- EP-A- 0 237 764
- EP-A- 0 252 875
- EP-A- 0 269 817
- EP-A- 0 393 746
- BE-A- 904 660
- FR-A- 2 516 350
- CHEMICAL PATENTS INDEX, DOCUMENTATION ABSTRACTS JOURNAL Section Ch, Week 9102, 13. M rz 1991 Derwent Publications Ltd., London, GB; Class C, AN 91-007802
- CHEMICAL ABSTRACTS, vol. 113, no. 4, 23. Juli 1990, Columbus, Ohio, US; abstract no. 25798f, JANSSEN PHARMACEUTICA 'Synergistic wood preservative compositions containing 1-((2 -(2,4-dichlorophenyl)-1,3-dioxolan-2-yl)me thyl)-1H-1,2,4-triazole derivatives' Seite 98 ;Spalte 2 ;
- Chemical Patents Index, basic Abstracts Journal Section Ch, Week 8637, 5. November 1986 Derwent Publications Ltd., London, GB, Class C, AN 86-239113/37

## Beschreibung

Die vorliegende Erfindung betrifft neue, insbesondere wäßrige und gegebenenfalls organisch-lösungsmittel- und emulgatorfreie mikrobizide Wirkstoffkombinationen aus einem bekannten Azolfungizid, einem quartären Ammoniumfungizid, und einem Iodpropargylcarbamat.

Es ist bekannt, daß Imidazol- oder Triazolfungizide, wie z.B. das α-[2-(4-Chlorphenyl)-ethyl]-α-(1,1-dimethyl-ethyl)-1-H-1,2,4-triazol-1-ethanol (Tebuconazol), das 2-(1-Chlorcyclopropyl)-1-(2-chlorphenyl)-3-(1,2,3-triazol-1-yl)-propan-2-ol und das 1-[[2-(2,4-Dichlorphenyl)-4-n-propyl-1,3-dioxolan-2-yl]-methyl]-1-H-1,2,4-triazol (Propiconazol) als solche oder in Form ihrer Salze zum Schutz von Pflanzen und Saatgut verwendet werden können (vgl. z.B. EP-A 0 040 345, EP-A 0 052 424).

Weiterhin ist bekannt, daß diese Verbindungen auch für den Einsatz im Materialschutz zur Bekämpfung materialzerstörender oder materialverfärbender Mikroben geeignet sind (vgl. z.B. DE-OS 3 621 494 und US 4 079 062).

Die Azolfungizide wie das genannte Tebuconazol weisen jedoch Wirkungslücken bei einigen für den Materialschutz relevanten Keimen wie z.B. Trichoderma spec. auf.

Desweiteren ist durch die oft geringe Wasserlöslichkeit von Azolen deren Einsatz in einigen Anwendungsgebieten wie z.B. Leder, wasserbasierter Holzschutz, Desinfektion, Kühlwasserbehandlung, Papierindustrie, Metallverarbeitung, technische Konservierung wasserhaltiger Produkte eingeschränkt oder nicht möglich.

Desweiteren sind Mischungen mit quartären Ammoniumsalzen bekannt (EP-237 764, BE-904 660). Quartäre Ammoniumsalze sind als breit wirksame Mikrobizide seit langem bekannt und finden z.B. Anwendung in der Desinfektion und Textilkonservierung.

Zwar sind diese Wirkstoffe meistens gut wasserlöslich, neigen aber bei den Anwendungskonzentrationen zu starker Schaumbildung, die in vielen Einsatzfeldern stört. Außerdem können sie aufgrund ihrer kationenaktiven Eigenschaften mit anionischen Komponenten wie Seifen, Tensiden etc. reagieren. Dadurch kann ihr Eigenschaftsprofil negativ beeinflußt werden, beziehungsweise können sie desaktiviert werden. Desweiteren ist bekannt, daß quartäre Ammoniumsalze durch die Anwesenheit von Eiweiß und Schmutz leicht desaktiviert werden.

Für viele Anwendungen in der Praxis des Materialschutzes ist es wünschenswert, die Wirkstoffe in flüssigen Formulierungen einzusetzen, die frei von organischen Lösemitteln sind oder in denen der entsprechende Lösemittelanteil drastisch reduziert ist.

Wasserunlösliche Lösemittel sind inkompatibel mit wäßrigen Produkten wie Lederflotten, Dispersionsfarben, Kühl- und Prozesswässern, Desinfektionsmitteln.

Häufig sind auch die Anwender nicht auf die Handhabung von Produkten in Form von Lösungen in organischen Lösungsmitteln eingerichtet, da zur Aufbringung aus dem Lösungsmittel und zu dessen Rückgewinnung, die zur Vermeidung ökologischer Probleme unerläßlich ist, besondere Vorrichtungen erforderlich sind, die mit hohen Investitionskosten verbunden sind.

Wasserlösliche Lösungsmittel wären als Lösungsvermittler in wäßrigen Systemen prinzipiell geeignet. Aber sie können, wenn sie in Abwasser gelangen, ökologische Probleme hervorrufen. Zudem können Lösemittel sich in den zu schützenden Produkten störend bemerkbar machen.

Eine weitere Möglichkeit der Lösevermittlung zur Herstellung wasserbasierter Wirkstoffformulierungen besteht in der Verwendung von Emulgatoren. Bei stark wasserunlöslichen Verbindungen wie Azolen werden hierfür in der Regel große Emulgatormengen benötigt, was aus ökologischen Gründen vermieden werden soll. Ebenso kann die Wirksamkeit mikrobizider Wirkstoffe stark durch die Verwendung von Emulgatoren beeinträchtig werden. Ebenso kann die Einsetzbarkeit für bestimmte Systeme begrenzt sein.

Aufgabe der Erfindung war daher die Bereitstellung neuer, vorzugsweise wasserbasierter, lösungsmittel- und emulgatorfreier mikrobizider Wirkstoffformulierungen auf der Basis von Tebuconazole, die sich einfach mit Wasser verdünnen lassen und dabei lagerstabile Gebrauchslösungen liefern.

Es wurde nun überraschenderweise gefunden, daß durch die Kombination von ± α-[2-(4-Chlorphenyl)-ethyl]-α-(1,1-dimethyl-ethyl)-1-H-1,2,4-triazol-1-ethanol (Tebuconazol) in Form der freien Base und
- C₁₂-C₁₄-Alkyl-benzyl-dimethylammoniumchlorid
sowie Iodpropargylbutylcarbamat (IPBC)
stabile wäßrige Lösungen oder Emulsionen hergestellt werden können, die eine besonders hohe mikrobizide Wirksamkeit aufweisen.

Derartige wäßrige Formulierungen vermeiden die vorgenannten ökologischen und anwendungstechnischen Nachteile lösemittelbasierter oder emulgatorvermittelter Formulierungen und stellen insofern eine wertvolle Bereicherung des Standes der Technik dar.

Das Azolfungizid liegt, wie schon erwähnt, in Form seiner freien Base vor.

Die Gewichtsverhältnisse der Wirkstoffe in den Wirkstoffkombinationen können in relativ großen Bereichen variiert werden.

Sie sind im allgemeinen abhängig von dem Einsatzgebiet und von den jeweils eingesetzten Azol- und quartären Ammoniumfungiziden. Diese Gewichtsverhältnisse können jedoch in Testreihen durch einfaches Mischen der Komponenten leicht festgestellt werden.

Vorzugsweise beträgt das Gewichtsverhältnis von Azolfungizid zu quartärem Ammoniumfungizid 1:99 bis 99:1, insbesondere 1:40 bis 9:1, besonders bevorzugt 1:20 bei 1:1 und ganz besonders bevorzugt 1:10 bis 1:2. Zur Herstellung von wäßrigen Formulierungen werden die Wirkstoffe einzeln oder als Wirkstoffkombination z.B. in Form von Pulvern, Granulaten, Pasten oder konzentrierten Lösungen, Suspensionen oder Emulsionen durch einfaches Mischen in Wasser eingearbeitet und liegen dann in Form einer wäßrigen Suspension, Lösung oder Emulsion vor.

Die wäßrigen Lösungen bzw. Emulsionen enthalten vorzugsweise mehr als 20 Gew.-%, insbesondere mehr als 40 Gew.-% Wasser und können beliebig mit Wasser bis auf Anwendungskonzentration verdünnt werden. Es ist selbstverständlich auch möglich, die Wirkstoffe bzw. Wirkstoffkombination in Form von Konzentraten, Lösungen, Suspensionen, Emulsionen, Pulvern, Granulaten oder Pasten direkt in den für die Anwendung erforderlichen Mengen z.B. durch Rühren in die Anwendungsmittel einzuarbeiten.

Die mikrobiziden Mitteln enthalten die Wirkstoffkombination in einer Konzentration von 0,001 bis 95 Gew.-%, insbesonders 0,01 bis 60 Gew.-% und daneben gegebenenfalls 0,001 bis 30 Gew.-%, insbesondere 0,01 bis 20 Gew.-%, ganz besonders 0,05 bis 10 Gew.-% eines geeigneten weiteren Fungizides, Insektizides oder eines weiteren Wirkstoffes.

Die erfindungsgemäßen Wirkstoffkombinationen bzw. Mittel weisen eine starke Wirkung gegen Mikroorganismen auf. Sie werden im Materialschutz zum Schutz technischer Materialien verwendet; sie sind vor allem wirksam gegen Schimmelpilze, holzverfärbende und holzzerstörende Pilze und Bakterien, sowie gegen Hefen, Algen und Schleimorganismen. Beispielhaft - ohne jedoch zu limitieren - seien die folgenden Gattungen von Mikroorganismen genannt:
Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride,Trichophyton wie Trichophyton mentagrophytes;
Escherichia wie Escherichia coli, Pseudomonas wie Pseudomonas areuginosa, Staphylocccus wie Staphyloccus aureus;
Candida wie Candida albicans.

Die Menge der eingesetzten Wirkstoffkombinationen ist von der Art und dem Vorkommen der Mikroorganismen der Keimzahl und von dem Medium abhängig. Die optimale Einsatzmenge kann bei der Anwendung jeweils durch Testreihen ermittelt werden. Im allgemeinen ist es jedoch ausreichend, 0,001 bis 20 Gew.-%, vorzugsweise 0,05 bis 10 Gew.-% der Wirkstoffgemische, bezogen auf das zu schützende Material, einzusetzen.

Die neuen Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit einem Lösungs- bzw. Verdünnungsmittel, Emulgatoren, Dispergatoren und/oder Binde- oder Fixiermittel, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organisch-chemische Lösungsmittel oder Lösungsmittelgemische und/oder ein polares organisches Lösungsmittel oder Lösungsmittelgemische und/oder ein öliges bzw. ölartiges organischchemisches Lösungsmittel oder Lösungsmittelgemisch und/oder Wasser mit mindestens einem Emulgator und/oder Netzmittel in Frage. Als übliche schwerflüchtige, wasserunlösliche, ölige oder ölartige Lösungsmitel werden vorzugsweise die jeweiligen Mineralöle/mineralölhaltige Lösungsmittelgemische oder deren Aromatenfraktionen verwendet. Beispielhaft seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170°C bis maximal 350°C.

Die vorbeschriebenen schwerflüchtigen, öligen oder ölartigen Lösungsmittel können teilweise durch leichter flüchtige, organisch-chemische Lösungsmittel ersetzt werden.

Zur Herstellung eines Holzschutzmittels wird vorzugsweise ein Teil des oben beschriebenen Lösungsmittels oder Lösungsmittelgemisches durch ein polares, organisch-chemisches Lösungsmittel oder Lösungsmittelgemisch ersetzt. Vorzugsweise gelangen dabei Lösungsmittel, die Hydroxygruppen, Estergruppen, Ethergruppen oder Gemische dieser Funktionalität enthalten, zum Einsatz. Beispielhaft seien Ester oder Glykolether genannt. Als Bindemittel werden erfindungsgemäß verstanden wasserverdünnbare bzw. in organisch-chemischen Lösungsmitteln lösliche, dispergier- oder emulgierbare Kunstharze, bindende, trocknende Öle, z.B. auf Basis von Acrylharzen, Vinylharzen, Polyesterharzen, Polyurethanharzen, Alkylharzen, Phenolharzen, Kohlenwasserstoffharzen, Siliconharzen. Das benutzte Bindemittel kann als Lösung, Emulsion oder Dispersion eingesetzt werden. Vorzugsweise werden Gemische aus Alkydharzen und trocknendem, pflanzlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällens vorbeugen. Vorzugsweise ersetzen sie 0,01 bis 30 % des Bindemittels (bezogen auf 100 % des eingesetzten Bindemittels).

Die Weichmacher stammen aus den chemischen Klassen oder Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylbenzophenon.

Als Lösungs- bzw. Verdünnungsmittel kommt vorzugsweise Wasser in Frage, gegebenenfalls in Mischung mit einem oder mehreren der oben genannten Lösungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Holz, Anstrichmittel, Kühlschmiermittel, wäßrige Hydraulikflüssigkeiten und Kühlkreisläufe.

Die erfindungsgemäßen Wirkstoffkombinationen, Mittel bzw. Konzentrate werden vorzugsweise zum Schutz von Holz und Holzwerkstoffen gegen Mikroorganismen, z.B. gegen holzzerstörende oder holzverfärbende Pilze, insbesondere im tropischen Holzschutz eingesetzt.

Unter Holz, welches durch die erfindungsgemäßen Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und -türen, Sperrholz, Spanplatten, Tischlerarbeiten oder Holzprodukte, die ganz allgmein beim Hausbau oder in der Bautischlerei Verwendung finden.

Ein besonders effektiver Holzschutz wird durch großtechnische Imgrägnierverfahren, z.B. Vakuum, Doppelvakuum oder Druckverfahren erzielt.

Die Wirksamkeit und das Wirkungsspektrum der erfindungsgemäßen Wirkstoffkombination bzw. den daraus herstellbaren Mitteln, Konzentraten oder ganz allgemein Formulierungen wird erhöht, wenn gegebenenfalls weitere antimikrobiell wirksame Stoffe, Fungizide, Insektizide oder andere Wirkstoffe zur Vergrößerung des Wirkstoffspektrums oder Erzielung besonderer Effekte wie z.B. dem zusätzlichen Schutz vor Insekten zugesetzt werden. Besonders günstige Mischungspartner sind z.B. die folgenden Verbindungen:

Sulfenamide wie Dichlofluanid (Euparen), Tolylfluanid (Methyleuparen), Folpet, Fluorfolpet; Benzimidazole (gegebenenfalls in Form ihrer Salze) wie Carbendazim (MBC), Benomyl, Fuberidazol, Thiabendazol: Thiocyanate wie Thiocyanatomethylthiobenzothiazol (TCMTB), Methylenbisthiocyanat (MBT); Morpholinderivate wie C₁₁-C₁₄-4-Alkyl-2,6-dimethylmorpholinhomologe (Tridemorph), (±)-cis-4-[3-tert.-Butylphenyl)-2-methylpropyl]-2,6-dimethylmorpholin (Fenpropimorph), Falimorph; Phenole wie o-Phenylphenol, halogenierte Kresole, Tribromphenol, Tetrachlorphenol, Pentachlorphenol, 3-Methyl-4-chlor-phenol; Dichlorphen; Iodpropargylderivate wie -chlorphenylformal, -phenylcarbamat, -hexylcarbamat, -cyclohexylcarbamat; Isothiazolinone wie N-Methylisothiazolin-3-on, 5-Chlor-N-methyl-isothiazolin-3-on, 4,5-Dichlor-N-octylisothiazolin-3-on, N-Octylisothiazolin-3-on (Octhilinone); Pyridine wie 1-Hydroxy-2-pyridinthion (und ihre Na-, Fe-, Mn, Zn-Salze), Tetrachloro-4-methyl-sulphonylpyridin, Tetrachlor-4-methyl-sulphonylpyridin; Metallseifen wie Zinn-, Kupfer-, Zink-naphthenat, -octoat, 2-ethylhexanoat, -olet, -phosphat, -benzoat, -oxid; Zinksalze von Dialkyldithiocarbamaten; Tetramethyldiuramdisulfit (TMTD); 2,4,5,6-Tetrachlorisophthalonitril (Chlorthalonil); Benzthiazole wie 2-Mercaptobenzothiazol; Thiazolylbenzimidazol; Chinoline wie ν-Hydroxychinolin, Benzylalkoholmono(poly)hemiformal; Tris-N-(cyclohexyldiazeniumdioxy)-aluminium, N-(Cyclohexyldiazeniumdioxy)-tributylzinn.

Als Insekten werden bevorzugt zugesetzt:
Phosphorsäureester wie Azinphos-ethyl, Azinphos-methyl, 1-(4-Chlorphenyl)-4-(O-ethyl, S-propyl)phosphoryloxy-pyrazol (TIA-230), Chlorpyrifos, Coumaphos, Demeton, Demetom-S-methyl, Diazinon, Dichlorvos, Dimethoate, Ethoprophos, Etrimfos, Fenitrothion, Fention, Heptenophos, Parathion, Parathion-methyl, Phosalone, Phoxion, Pirimiphos-ethyl, Pirimiphos-methyl, Profenofos, Prothiofos, Sulprofos, Triazophos und Trichlorphon:
Carbamate wie Aldicarb, Bendiocarb, BPMC (2-(1-Methyl-propyl)phenylmethylcarbamat), Butocarboxim, Butoxicarboxim, Carbaryl, Carbofuran, Carbosulfan, Cloethocarb, Isoprocarb, Methomyl, Oxamyl, Pirimicarb, Promecarb, Propoxur und Thiodicarb;
Pyrethroide wie Allethrin, Alphamethrin, Bioresmethrin, Byfenthrin (FMC 54 800), Cycloprothrin, Cyfluthrin, Decamethrion, Cyhalothrin, Cypermethrin, Deltamethrin, Alpha-cyano-3-phenyl-2-methylbenzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin und Resmethrin; Nitroimide wie 1-[(6-Chlor-3-pyridinyl)-methyl]-4.5-dihydro-N-nitro-1H-imidazol-2-anin (Imidacloprid).

Als andere Wirkstoffe kommen in Betracht Algizide, Molluskizide, Wirkstoffe gegen "sea animals", die sich auf z.B. Schiffsbodenanstrichen ansiedeln.

Die erfindungsgemäßen Wirkstoffkombinationen bzw. Mittel ermöglichen in vorteilhafter Weise, die bisher verfügbaren, mikrobiziden Mittel durch effektivere und umweltverträglichere zu ersetzen. Sie zeigen eine gute Stabilität und haben in vorteilhafter Weise ein breites Wirkungsspektrum.

Das nachfolgende Beispiel dient zur Erläuterung der Erfindung, ohne sie darauf zu limitieren. Teile und Prozentangaben bedeuten Gewichtsteile bzw. Gewichtsprozente.

### Beispiel

In 42,5 g Wasser werden 42,5 g C₁₂-C₁₄-Alkyl-benzyl-dimethylammoniumchlorid gelöst vorgelegt. Diese Lösung wird auf 60°C erwärmt und 10 g Tebuconazole hinzugefügt. In diese klare Lösung werden noch 5,0 g Iodpropargylbutylcarbamat eingerührt und klar gelöst.

## Patentansprüche

1. Wirkstoffkombination aus Tebuconazole in Form der freien Base,
- C₁₂-C₁₄-Alkyl-benzyl-dimethylammoniumchlorid
und Iodpropargylbutylcarbamat.

2. Mikrobizide Mittel für den Materialschutz, enthaltend eine Wirkstoffkombination gemäß Anspruch 1, Lösungs- bzw. Verdünnungsmittel sowie gegebenenfalls Verarbeitungshilfsmittel und gegebenenfalls weitere Wirkstoffe.

3. Mikrobizide Mittel gemäß Anspruch 3, enthaltend Wasser.

4. Mikrobizide Mittel gemäß Anspruch 3, zum Schutz von Holz und Leder.

5. Verfahren zur Bekämpfung von Mikroorganismen, dadurch gekennzeichnet, daß man die Wirkstoffkombination gemäß Anspruch 1 auf Mikroben oder deren Lebensraum einwirken läßt.

6. Verwendung der Wirkstoffkombination gemäß Anspruch 1, als Mikrobizid zum Schutz von technischen Materialien.

7. Verwendung gemäß Anspruch 6 als Fungizid zum Schutz von Leder und Holz.

8. Verwendung der Wirkstoffkombination gemäß Anspruch 1 zur Herstellung von stabilen, gegebenenfalls organisch-, lösungsmittel- und emulgatorfreien, wäßrigen mikrobiziden Mitteln.

## Claims

1. Active compound combination of tebuconazole, in the form of the free base - C₁₂-C₁₄-alkyl-benzyl-dimethylammonium chloride and iodopropargyl butylcarbamate.

2. Microbicidal agents for the preservation of materials, comprising an active compound combination according to Claim 1, solvents or diluents and if appropriate processing auxiliaries and if appropriate other active compounds.

3. Microbicidal agents according to Claim 3, comprising water.

4. Microbicidal agents according to Claim 3, for the preservation of wood and leather.

5. Method of combating microorganisms, characterised in that the active compound combination according to Claim 1 is allowed to act on microbes or their habitat.

6. Use of the active compound combination according to Claim 1 as a microbicide for the preservation of industrial materials.

7. Use according to Claim 6, as a fungicide for the preservation of leather and wood.

8. Use of the active compound combination according to Claim 1 for the preparation of stable, optionally organic-, solvent- and emulsifier-free aqueous microbicidal agents.

## Revendications

1. Combinaison de substances actives consistant en le Tebuconazol à l'état de base libre,
- un chlorure d'(alkyle en C₁₂-C₁₄)benzyl-diméthylammonium et
le butylcarbamate d'iodopropargyle.

2. Produits microbicides pour la protection des matières et matériaux, contenant une combinaison de substances actives selon la revendication 1, des solvants et/ou diluants et le cas échéant des produits auxiliaires d'application et le cas échéant d'autres substances actives.

3. Produits microbicides selon la revendication 2, contenant de l'eau.

4. Produits microbicides selon la revendication 3, pour la protection du bois et du cuir.

5. Procédé pour combattre des micro-organismes, caractérisé en ce que l'on fait agir la combinaison de substances actives selon la revendication 1 sur les microbes ou leur habitat.

6. Utilisation de la combinaison de substances actives selon la revendication 1 en tant que microbicide pour la protection des matières et matériaux techniques.

7. Utilisation selon la revendication 6 en tant que fongicide pour la protection du cuir et du bois.

8. Utilisation de la combinaison de substances actives selon la revendication 1 pour la préparation de produits microbicides aqueux stables et le cas échéant exempts de solvants organiques et d'agents émulsionnants.
